(19) Europäisches Patentamt
European Patent Office
Office européen des brevets

(11) **EP 2 976 707 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(21) Anmeldenummer: **14707725.9**

(22) Anmeldetag: **27.02.2014**

(51) Int Cl.:
*G06F 7/58* (2006.01)  *H04L 9/08* (2006.01)
*H03K 3/84* (2006.01)  *H04L 9/06* (2006.01)

(86) Internationale Anmeldenummer:
**PCT/EP2014/053819**

(87) Internationale Veröffentlichungsnummer:
**WO 2014/177300 (06.11.2014 Gazette 2014/45)**

(54) **VORRICHTUNG UND VERFAHREN ZUM ERZEUGEN VON ZUFALLSBITS**

SYSTEM AND METHOD FOR GENERATING RANDOM BITS

DISPOSITIF ET PROCÉDÉ POUR GÉNÉRER DES BITS ALÉATOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2013 DE 102013208152**

(43) Veröffentlichungstag der Anmeldung:
**27.01.2016 Patentblatt 2016/04**

(73) Patentinhaber: **Siemens Aktiengesellschaft 80333 München (DE)**

(72) Erfinder: **DICHTL, Markus 80636 München (DE)**

(56) Entgegenhaltungen:
**EP-A1- 1 643 643     DE-A1-102010 026 688**
**US-A- 5 811 983     US-B2- 6 642 802**

• **MURPHY J P: "Field-programmable true random number generator", ELECTRONICS LETTERS, IEE STEVENAGE, GB, Bd. 48, Nr. 10, 10. Mai 2012 (2012-05-10), Seiten 565-566, XP006040847, ISSN: 0013-5194, DOI: 10.1049/EL.2012.0432**

**Beschreibung**

Die vorliegende Erfindung betrifft eine Vorrichtung und ein Verfahren zum Erzeugen eines oder mehrerer Zufallsbits. Es wird zum Beispiel eine Zufallsbitfolge erzeugt, welche als binäre Zufallszahl verwendet wird. Die vorgeschlagenen Vorrichtungen und Verfahren zum Erzeugen von Zufallsbits dienen beispielsweise der Implementierung von Zufallszahlengeneratoren.

In sicherheitsrelevanten Anwendungen, beispielsweise bei asymmetrischen Authentifikationsverfahren, sind Zufallsbitfolgen als binäre Zufallszahlen notwendig. Dabei ist es gewünscht, insbesondere bei mobilen Anwendungen einen möglichst geringen Hardwareaufwand zu betreiben. Bekannte Maßnahmen, um Zufallszahlen zu erzeugen, sind beispielsweise Pseudozufallszahlen, analoge Zufallsquellen, Ringoszillatoren und deren Abwandlungen.

Bei Pseudozufallszahlen werden Seeds verwendet, von denen ausgehend deterministische Pseudozufallszahlen berechnet werden. Zur Erzeugung des Seeds wird in der Regel ein physikalischer Zufallsgenerator verwendet. Als analoge Zufallsquellen werden Rauschquellen, wie z.B. das Rauschen von Zenerdioden, verstärkt und digitalisiert. Dabei ist die Verbindung von digitaler mit analoger Schaltungstechnik meist nur aufwändig zu verwirklichen.

Bei Ringoszillatoren, die aus einer ungeraden Anzahl von hintereinander geschalteten Invertern aufgebaut sind, ergeben sich zufällige Jitter aus schwankenden Durchlaufzeiten der Signale durch die Inverter. Diese Jitter, also eine unregelmäßige zeitliche Schwankung in Zustandsänderungen der durch die Inverter geschickten Signale, können bei mehrfachen Durchläufen durch die Ringoszillatorschaltung akkumuliert werden, so dass letztlich ein zufälliges analoges Signal entsteht. Nachteilig bei Ringoszillatoren ist häufig die notwendige lange Zeit vom Start der Schwingung bis ein brauchbar zufälliges Signal aufgrund der Jitter-Akkumulierung entsteht. Daher ergeben sich meist niedrige nicht akzeptable Datenerzeugungsraten bei Ringoszillatoren. Ferner ist möglich, dass die sich addierenden Jitter-Beiträge sich auch selbst wieder aufheben, so dass im Mittel zufällige kurze Gatterlaufzeiten durch zufällige längere Gatterlaufzeiten kompensiert werden.

Fibonacci- und Galois-Ringoszillatoren erzeugen schneller zufällige Signalformen als klassische Ringoszillatoren. Allerdings werden verschiedene digitale Gatter wie XOR- und NOT-Gatter eingesetzt. Dadurch können sich insbesondere bei Implementierungen auf ASICs große Geschwindigkeitsunterschiede der Gattertypen ergeben. Häufig besteht der Wunsch, mit Hilfe von FPGAs (Field Programmable Gate Arrays) Zufallsbitfolgen zu erzeugen. Allerdings können auch bei diesen Digitalbausteinen beispielsweise aufgrund von Umgebungstemperaturschwankungen periodische Schwingungen einsetzen, die nur eine geringe Entropie oder Zufälligkeit in den Signalen haben.

Die europäische Patentanmeldung EP 1 643 643 A1 offenbart einen Zufallszahlengenerator mit zwei Ringoszillatoren, wobei eine Rückkopplung eines externen Paritätssignals vorgesehen ist.

Daher besteht eine Aufgabe der vorliegenden Erfindung darin, eine verbesserte Vorrichtung und/oder ein Verfahren zum Erzeugen von Zufallsbits bereitzustellen.

Demgemäß wird eine Vorrichtung zum Erzeugen von Zufallsbits vorgeschlagen, die umfasst: mehrere Abbildungseinrichtungen, wobei eine jeweilige Abbildungseinrichtung eingerichtet ist, eine vorgegebene Anzahl $n$ Eingangssignale mit Hilfe einer kombinatorischen Abbildung in eine vorgegebene Anzahl $p$ Ausgangssignale abzubilden. Dabei sind die Abbildungseinrichtungen miteinander verkettet, und es ist mindestens eine Rückkopplungsschleife ausgebildet. Die Rückkopplungsschleife ist insbesondere derart ausgebildet, dass eine Zustandsänderung mindestens eines Ausgangssignals einer ausgewählten Abbildungseinrichtung als eine Zustandsänderung mindestens eines Eingangssignals einer anderen Abbildungseinrichtung zugeführt ist.

Vorzugsweise ist die andere Abbildungseinrichtung keine direkt benachbarte Abbildungseinrichtung.

Dabei liegt insbesondere eine Rückkopplungsschleife derart vor, dass eine Zustandsänderung mindestens eines Rückkopplungsausgangssignals einer bestimmten Abbildungseinrichtung als eine Zustandsänderung mindestens eines Eingangssignals einer anderen Abbildungseinrichtung derart zugeführt ist, dass eines oder mehrere Ausgangssignale der bestimmten Abbildungseinrichtung von der Zustandsänderung des Rückkopplungsausgangssignals beeinflusst wird.

Ferner ist mindestens eine kombinatorische Abbildung derart eingerichtet, dass eine Zustandsänderung eines Eingangssignals einer jeweiligen Abbildungseinrichtung im Mittel auf mehr als ein Ausgangssignal der jeweiligen Abbildungseinrichtung abgebildet wird.

Die Anzahl der $n$ Eingangssignale einer jeweiligen Abbildungseinrichtung kann der Anzahl $p$ der Ausgangssignale entsprechen. Es ist aber auch denkbar, dass $n$ ungleich $p$ ist, also dass mit Hilfe einer jeweiligen Abbildungseinrichtung die Zustände der Eingangssignale auf Zustände von Ausgangssignalen abgebildet werden, wobei die Anzahl der Ausgangssignale kleiner oder größer als die Anzahl der Eingangssignale für eine jeweilige Abbildungseinrichtung ist.

Die Abbildungseinrichtungen können logische oder kombinatorische Gatter sein, die insbesondere eine bijektive Abbildung von $n$ Eingangssignalen auf $n$ Ausgangssignale realisiert. Die Eingangssignale schwanken zwischen Pegeln, die logischen Zuständen, wie Bits 1 bzw. High oder 0 bzw. Low zugeordnet werden können. Unter einer bijektiven Abbildung versteht man eine eineindeutige Abbildung zwischen den $2^n$ möglichen logischen Werten der Eingangssignale und den $2^n$ logischen Werten der Ausgangssignale.

Insofern ergibt sich mit Hilfe der Abbildungseinrichtungen in Ausführungsformen der Vorrichtung ein n-Spur-Ringoszillator. Die Abbildungseinrichtungen können auch als Knoten oder Gatter bezeichnet sein. Die jeweilige kombinatorische Abbildung ist insbesondere derart eingerichtet, dass im Mittel bei einer Zustandsänderung eines Eingangssignals an mehr als einem Ausgangssignal ein Zustandswechsel erfolgt. Das führt dazu, dass ein jeweiliger Jitter des Eingangssignals auf mehrere Ausgangssignale abgebildet wird und daher verstärkt wird. Ein einmal aufgetretener Jitter in einem Signal wird mit Hilfe der Abbildungseinrichtungen bzw. der darin implementierten kombinatorischen Abbildungen auf mehrere Ausgangsspuren kopiert, so dass sich Jitter-Komponenten kaum kompensieren können.

Man kann bei der Vorrichtung auch von einer Mehrspur-Ringoszillatorschaltung sprechen. Gegenüber klassischen einspurigen Ringoszillatoren besteht insbesondere der Vorteil, dass mit einer höheren Datenrate zufällige Bitwerte abgegriffen werden können. Beispielsweise kann ein Zufallsbitsignal an einem oder mehreren der Datenpfade, welche sich durch die n Ein- bzw. Ausgangssignale ergeben, abgeleitet werden.

Man kann sagen, die Vorrichtung entwickelt "Schwingungen" oder Signalwechsel propagieren im Kreis. Vorzugsweise hängt mindestens eines der Ausgangssignale kausal von sich selbst ab, indem es rückgekoppelt wird, wobei die Rückkopplung mit Hilfe mehrerer zwischengeschalteter Abbildungen erfolgt.

In Ausführungsformen der Vorrichtung ist mindestens eine kombinatorische Abbildung derart eingerichtet, dass die Eingangssignale unter Beaufschlagung eines Jitters und einer logischen Funktion auf die Ausgangssignale abgebildet werden. Durch die hardwaremäßige Implementierung der kombinatorischen Abbildung durch die Abbildungseinrichtungen können sich Jitter, also Schwankungen, in dem zeitlichen Verlauf von Signalflanken ergeben. Dieser Jitter wird dann durch Vollziehen der logischen Funktion, also der Abbildung der Kombination von n Eingangssignalen oder Bitwerten auf n Ausgangssignale oder Bitwerte jeweils weitergeführt und akkumuliert sich über die Durchläufe und Rückkopplung der Abbildungseinrichtungen.

Vorzugsweise sind zumindest einige der Abbildungen keine kombinatorischen Abbildungen, welche ausschließlich eine Permutation der Eingangssignale auf die Ausgangssignale liefern. Eine Permutation der Eingangssignale liegt insbesondere dann vor, wenn die Ausgangssignale den Eingangssignalen entsprechen, oder lediglich durch eine Änderung der Reihenfolge aus den Eingangssignalen entstehen. Bei einer Permutation ergibt sich keine "Vervielfältigung" des Jitters.

In Ausführungsformen der Vorrichtung zum Erzeugen von Zufallsbits sind die Abbildungseinrichtungen derart eingerichtet, dass deren Signaldurchlaufzeiten gleich sind. Durch möglichst gleiche Signallaufzeiten wird das Risiko vermindert, dass sich Jitter-Beiträge gegenseitig kompensieren können. Außerdem wird eine Implementierung in der Art von ASICs oder FPGAs erleichtert. Beispielsweise sind die Abbildungseinrichtungen so eingerichtet, dass alle mögliche Zustandswechsel an den jeweiligen Ausgängen alle innerhalb eines Toleranzintervalls von 100 ps und bevorzugt innerhalb von 50 ps erfolgen.

In Ausführungsformen der Vorrichtung umfasst mindestens eine Abbildungseinrichtung einer Lookup-Table bzw. eine Nachschlagetabelle zur Implementierung der kombinatorischen Abbildung. Es ist auch möglich, dass alle Abbildungseinrichtungen mit einer jeweiligen Lookup-Table versehen sind. Lookup-Tables können einfach ausgelesen werden und erfordern nur einen geringen Hardwareaufwand. Häufig sind in programmierbaren Logikchips, wie FPGAs, entsprechende Felder oder bereits Tabellen vorgesehen.

In Ausführungsformen der Vorrichtung können die Lookup-Tables mit zufälligen Bitwerten unter Verwendung von Zufallselementen gefüllt werden. Es ist beispielsweise möglich, die Lookup-Tables, die in Abhängigkeit von einem Eingangsbitmuster an Eingängen der Abbildungseinrichtungen ein entsprechendes Ausgangsbitmuster an Ausgängen liefern, so zu erzeugen, dass die durch die Lookup-Table repräsentierte Abbildung zufällig aus allen $(2^n)$ ! Bijektionen von n logischen Signalen auf n logische Signale ausgewählt wird. Vorzugsweise sind in den Abbildungseinrichtungen jeweils unterschiedliche kombinatorische Abbildungen implementiert.

In Ausführungsformen der Vorrichtung bilden die miteinander verketteten Abbildungseinrichtungen eine mehrspurige Ringoszillatorschaltung aus.

Es ist denkbar, dass in der Vorrichtung mehrere Rückkopplungszweige von verketteten Abbildungseinrichtungen vorliegen. Es ist beispielsweise möglich, mehrere Einzelketten zu verschiedenen Rückkopplungen zusammenzuschalten.

In Ausführungsformen der Vorrichtung ist die Vorrichtung derart eingerichtet, dass insbesondere bei einem erstmaligen Einkoppeln von Eingangssignalen die Eingangssignale derart vorgegeben sind, dass die Vorrichtung nicht in einem Fixpunkt vorliegt. Beispielsweise können feste wohldefinierte Pegel an die Eingänge einer der Abbildungseinrichtungen angelegt werden, um aus einem wohldefinierten Zustand zu starten. Anschließend ergibt sich durch die Rückkopplung und die verkettete Anwendung der kombinatorischen Abbildungen auf die Signale ein n oder p Bit breites Zufallsbitsignal.

Die Vorrichtung ist vorzugsweise insbesondere derart eingerichtet, dass sie keinen Fixpunkt aufweist. Dazu werden die kombinatorischen Abbildungen derart ausgewählt und implementiert, dass kein Fixpunkt vorliegt.

Vorzugsweise ist die vorgegebene Anzahl n beziehungsweise p von Eingangs- beziehungsweise Ausgangssignalen mindestens drei. In Ausführungsformen ist die Bitbreite oder die Anzahl n beziehungsweise p von vorgegebenen Eingangs- beziehungsweise Ausgangssignalen an den Abbildungseinrichtungen vier oder mehr.

In Ausführungsformen der Vorrichtung ist eine Abtastvorrichtung zum Abtasten eines oder mehrerer Ausgangssignale an Ausgängen einer Abbildungseinrichtung vorgesehen. Die Abtastvorrichtung kann auch ein jeweiliges Ein- oder Ausgangssignal an unterschiedlichen Abbildungseinrichtungen erfassen. Das Abtasten erfolgt beispielsweise getaktet oder zu vorgegebenen anderen Zeitpunkten und dient der Ableitung eines Bitwertes H oder L, der aufgrund des stark schwankenden zufälligen Signals eine hohen Entropie bzw. Zufälligkeit aufweist.

In Ausführungsformen umfasst die Abtastvorrichtung mindestens ein Zwischenspeicherelement. Das Zwischenspeicherelement kann ein Flip-Flop, wie zum Beispiel ein T-Flip-Flop oder eine Latch-Einrichtung aufweisen. Denkbar sind auch einer oder mehrere Zähler zum Erfassen von Signalflanken oder Zustandswechseln einzelner Signale. Ein T-Flip-Flop ist insbesondere geeignet, steigende oder fallende Signalflanken modulo 2 zu zählen.

Die Erfassungseinrichtung kann derart eingerichtet sein, dass ein Ausgangssignal in Abhängigkeit von einem anderen Ausgangssignal abgetastet wird. Denkbar ist zum Beispiel, dass eine Signalflanke eines ersten Ausgangssignals das Abtasten eines anderen Ausgangssignals triggert oder hervorruft.

In Ausführungsformen ist die Vorrichtung Teil einer FPGA-Einrichtung oder einer ASIC-Einrichtung.

Es wird darüber hinaus ein Verfahren zum Erzeugen von Zufallsbits vorgeschlagen, bei dem mehrere kombinatorische Abbildungen verkettet nacheinander durchgeführt werden. Dabei bildet eine jeweilige kombinatorische Abbildung eine vorgegebene Anzahl n Eingangssignale auf eine vorgegebene Anzahl p Ausgangssignale ab. Durch die Verkettung der kombinatorischen Abbildungen wird mindestens eine Rückkopplungsschleife gebildet. Dabei wird mindestens eine kombinatorische Abbildung derart gewählt, dass eine Zustandsänderung eines Eingangssignals durch die kombinatorischen Abbildungen im Mittel auf mehr als ein Ausgangssignal abgebildet wird. Ein jeweiliges Eingangssignal kann z.B. einen Bitwert darstellen.

Vorzugsweise wird die mindestens eine Rückkopplung derart gebildet, dass eine Zustandsänderung mindestens eines Ausgangssignals einer ausgewählten kombinatorischen Abbildung als eine Zustandsänderung mindestens eines Eingangssignals einer anderen kombinatorischen Abbildung zugeführt wird.

Die kombinatorischen Abbildungen können als n auf p Abbildungen bezeichnet werden.

Das Verfahren kann insbesondere über geeignete Beschreibungssprachen, beispielsweise VHDL oder Verilog, auf oder in einer FPGA- oder ASIC-Vorrichtung implementiert werden. Bei der FPGA-Vorrichtung bzw. dem Verfahren sind die Abbildungseinrichtungen vorzugsweise derart eingerichtet, dass Zustandsänderungen an einem Eingangssignal der n Eingangssignale in Abhängigkeit von der kombinatorischen Abbildung zu einem gleichen Zeitpunkt einen Zustandswechsel in einem oder mehreren der p Ausgangssignale möglichst zeitgleich hervorrufen.

Weitere mögliche Implementierungen der Erfindung umfassen auch nicht explizit genannte Kombinationen von zuvor oder im Folgenden bezüglich der Ausführungsbeispiele beschriebenen Vorrichtungen oder Verfahrensvarianten. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:

Fig. 1      eine schematische Darstellung eines ersten Ausführungsbeispiels für eine Vorrichtung zum Erzeugen von Zufallsbits;

Fig. 2      eine schematische Darstellung eines zweiten Ausführungsbeispiels für eine Vorrichtung zum Erzeugen von Zufallsbits;

Fig. 3 - 6  zeitliche Verläufe von Zufallsbitsignalen, welche gemäß Ausführungsbeispielen des Verfahrens und der Vorrichtung zum Erzeugen von Zufallsbits erzeugt sind; und

Fig. 7      eine schematische Darstellung eines dritten Ausführungsbeispiels für eine Vorrichtung zum Erzeugen von Zufallsbits.

In den Figuren sind funktionsgleiche Elemente mit denselben Bezugszeichen versehen, sofern nichts anderes angegeben ist.

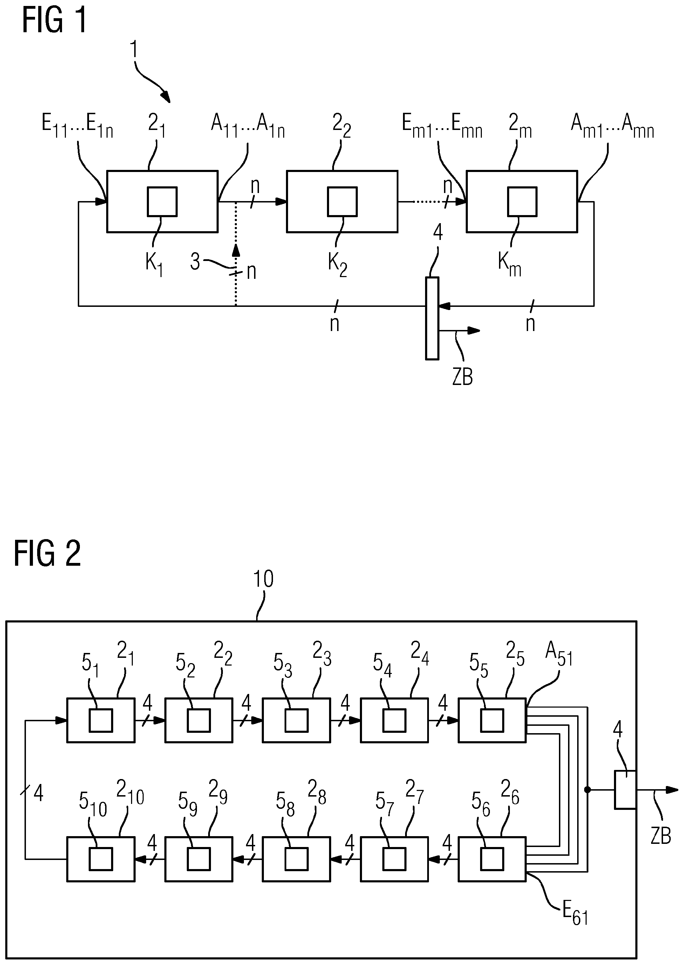

Die Fig. 1 zeigt eine schematische Darstellung eines ersten Ausführungsbeispiels für eine Vorrichtung zum Erzeugen von Zufallsbits. Die Vorrichtung 1 ist in der Art eines n-Kanal- oder n-Spur-Ringoszillators aufgebaut. Dazu sind seriell hintereinander kombinatorische Digitalschaltungen $2_1$ bis $2_m$ gekoppelt. Die kombinatorischen Digitalschaltungen $2_1$ bis $2_m$ können auch als logische Gatter oder Abbildungseinrichtungen für eine jeweilige kombinatorische Abbildung verstanden werden.

Jede Abbildungseinrichtung $2_i$ hat n Eingänge für ein n Bit breites Eingangssignal $E_{ij}$ mit j = 1...n und p Ausgänge für ein p Bit-breites Ausgangssignal $A_{ij}$ mit j = 1...p. In der Fig. 1 sind die Ein- und Ausgänge nicht explizit angegeben. Eine jeweilige Abbildungseinrichtung $2_i$ empfängt insofern $E_{i1}$ bis $E_{in}$ Eingangssignale und gibt $A_{i1}$ bis $A_{ip}$ Ausgangssignale aus. Die Verknüpfung zwischen Ein- und Ausgangssignalen ist über eine kombinatorische Abbildung $K_i$ realisiert. Man erkennt in der Darstellung der Fig. 1, in der n = p ist, dass die $K_1$ bis $K_m$ kombinatorischen Abbildungen hintereinander verkettet erfolgen und das Abbildungsergebnis bzw. die Ausgangssignale $A_{m1}$ bis $A_{mp}$ als Eingangssignale $E_{11}$ bis $E_{1n}$ an die erste Abbildungseinrichtung $2_1$ geführt sind. Insofern ergibt sich eine Rückkopplung wie bei einem Ringoszillator.

Um eine Rückkopplung zu erzielen sind nicht notwendigerweise alle Ausgangssignale $A_{m1}$ bis $A_{mp}$ als Eingangssignale $E_{11}$ bis $E_{1n}$ einer signalpfadaufwärts verketteten Abbildungseinrichtung $2_1$ zuzuführen. Prinzipiell genügt es, ein einzelnes Ausgangssignal $A_{ij}$ auszuwählen und einer im Signalweg oder Signalpfad vorgeschalten Abbildungseinrichtung $2_k$ zuzuführen, sofern ein Zustandswechsel des an dem jeweiligen Eingang vorliegenden Signals $E_{kl} \sim A_{ij}$ im Mittel zu Zustandswechseln in mehr als einem der Ausgangssignale $A_{ko}$ (o=1...n) führt. Je mehr Ausgangssignale rückgekoppelt werden, desto stärker wird ein vorliegender Jitter mit Hilfe der implementierten kombinatorischen Abbildungen $K_1$ - $K_m$ verstärkt und auf die n "Kanäle" kopiert. Die Abbildungseinrichtungen müssen auch nicht zwingend dieselbe Anzahl von Ein- und Ausgängen n haben, der Einfachheit halber werden jedoch hier zunächst Beispiele mit der gleichen Anzahl von Eingangssignalen und Ausgangssignalen erläutert.

Da die Abbildungseinrichtungen $2_1$ - $2_m$ eine ringförmige Topologie ausbilden, kann auch eine Vorwärtskopplung von Ausgangssignalen $A_{m1}$ bis $A_{mn}$ an Eingänge signalstromabwärts verketteter Abbildungseinrichtungen $2_1$ - $2_m$ dazu führen, dass jitterbehaftete Signalflanken durch die verketteten Abbildungseinrichtungen $2_1$ - $2_m$ propagieren und dabei Jitter verstärkt und vervielfältigt werden.

Die jeweilige Abbildungseinrichtung $2_i$ mit der implementierten kombinatorischen Abbildung $K_i$ kann auch als Knoten, Gatter oder kombinatorische Digitalschaltung bezeichnet werden. Die in den Abbildungseinrichtungen $2_1$ bis $2_m$ implementierten kombinatorischen Abbildungen $K_1$ bis $K_m$ sind so gewählt, dass eine Veränderung eines jeweiligen Input-Bits bzw. eines logischen Zustandes eines Eingangssignals $E_{ij}$ im Mittel zu Änderungen in mehr als einem der Output-Bits des jeweiligen Knotens bzw. der jeweiligen Abbildungseinrichtung führt. Insofern akkumulieren und vervielfältigen sich Jitter, die in den Signalen $E_{11}$ bis $E_{mn}$ bzw. $A_{11}$ bis $A_{mn}$ vorliegen, beim Durchlauf durch die verketteten Abbildungseinrichtungen $2_1$ bis $2_m$.

Die jeweilige Signaldurchlaufzeit in einer Abbildungseinrichtung bzw. einem logischen oder kombinatorischen Gatter $2_i$ ist für alle Eingangssignale $E_{i1}$ bis $E_{in}$ im Wesentlichen gleich, so dass aufgrund der implementierten kombinatorischen Abbildung $K_i$ der Wechsel eines logischen Zustands an einem Eingangssignal $E_{ij}$ im Wesentlichen zeitgleich zu logischen Wechseln an einem oder mehreren Ausgangssignalen $A_{il}$ mit $l \in \{1, 2,...n\}$ ist. Insofern ergeben sich n Kanäle mit zufälligen Signalformen, die von den Jittern hervorgerufen sind, die von den die digitalen Abbildungseinrichtungen aufbauenden Schaltelementen hervorgerufen sind.

Es ist eine Abtasteinrichtung 4 vorgesehen, die beispielsweise eines oder mehrere der Ausgangssignale $A_{m1}$ bis $A_{mn}$ der Abbildungseinrichtung $2_m$ erfasst und, da sich jeweils eine zufällige Signalverlaufsform ergibt, daraus ein Zufallsbitsignal ZB ableitet. Beispielsweise kann getaktet oder bei Bedarf ein Signalpegel abgegriffen und erfasst werden und dieser als ein H- oder L- bzw. 1- oder 0-Bitwert interpretiert werden.

Es ist dabei möglich, die Vorrichtung bzw. den Zufallsbitgenerator 1 in einen Anfangszustand zu versetzen, bei dem kein Fixpunkt vorliegt. Dies erfolgt beispielsweise dadurch, dass über die gesamte Bitbreite n beispielsweise die Eingangssignale $E_{11}$ bis $E_{1n}$ für die erste Abbildungseinrichtung $2_1$ jeweils wohldefinierte Pegel erhalten. Darüber hinaus kann dann die Rückkopplungsleitung zwischen der Abbildungseinrichtung $2_m$ und der Abbildungseinrichtung $2_1$ vorübergehend unterbrochen sein. Anschließend lässt man die Oszillation frei laufen, so dass sich zufällige Signalformen in den n abgreifbaren Kanälen oder Pfaden ergeben.

In der Fig. 1 ist optional angedeutet, dass auch ein weiterer Rückkopplungspfad 3 (gestrichelt dargestellt) implementiert werden kann. Prinzipiell lassen sich auch kompliziertere Rückkopplungstopologien beispielsweise in der Art von Galois- oder Fibonacci-Topologien mit n-Spur-Abbildungseinrichtungen realisieren.

Die schematisch angedeutete Vorrichtung zum Erzeugen von Zufallsbits 1 lässt sich insbesondere aufwandsgünstig in FPGA- oder ASIC-Einrichtungen realisieren. Gegenüber klassischen einkanaligen Ringoszillatoren lassen sich mit einer höheren Datenrate Zufallsbits erzeugen, da insbesondere der den Zufall begünstigende Jitter mit Hilfe der mehreren Kanäle potenziell n-fach vervielfältigt wird. Es ist durch die vielen Kanäle und Abbildungen unwahrscheinlich, dass Jitter-Beiträge einander kompensieren. Insofern kann aufwandsgünstig ein Zufallszahlengenerator mit einer hohen Zufallsbit-Erzeugungsfrequenz realisiert werden.

In der Fig. 2 ist ein weiteres Ausführungsbeispiel für eine Vorrichtung zum Erzeugen von Zufallsbits angedeutet. Im Wesentlichen sind dieselben Elemente wie in der Fig. 1 dargestellt, wobei jedoch der Zufallsbitgenerator 10 mit Hilfe eines FPGA-Bausteins realisiert ist. Es sind m = 10 kombinatorische Gatter bzw. Abbildungseinrichtungen $2_1$ bis $2_{10}$ seriell miteinander verkettet und rückgekoppelt. Die kombinatorischen Gatter $2_1$ bis $2_{10}$ haben jeweils vier Eingänge und vier Ausgänge, so dass sich ein Vier-Kanal- oder Vier-Spur-Ringoszillator ergibt. Die kombinatorischen Abbildungen, welche durch die Gatter $2_1$ bis $2_{10}$ realisiert sind, ergeben sich aus Lookup-Tables $5_1$ bis $5_{10}$.

In der folgenden Tabelle ist eine beispielhafte kombinatorische Abbildung $K_q$ dargestellt, die n=4 Eingangszustände bzw. Eingangssignale $E_{q1}$ - $E_{q4}$ auf p=4 Ausgangszustände bzw. Ausgangssignale $A_{q1}$ - $A_{q4}$ abbildet. Zur Vereinfachung der Darstellung wird angenommen, dass die Eingangssignale $E_{q1}$ - $E_{q4}$ und die Ausgangssignale $A_{q1}$ - $A_{q4}$ logische Zustände 0 oder 1 bzw. L oder H repräsentieren, obwohl durch die "Verzufälligung" und starker Beaufschlagung mit zufälligen Jittern eher keine wohldefinierten logischen Pegel in der als Hardware bzw. als Schaltung implementierten Vorrichtung zum Erzeugen von Zufallsbits vorliegen.

| $E_{q4}$ | $E_{q3}$ | $E_{q2}$ | $E_{q1}$ | $A_{q4}$ | $A_{q3}$ | $A_{q2}$ | $A_{q1}$ |
|---|---|---|---|---|---|---|---|
| 0 | 0 | 0 | 0 | 0 | 1 | 0 | 0 |
| 0 | 0 | 0 | 1 | 1 | 0 | 0 | 1 |
| 0 | 0 | 1 | 0 | 0 | 0 | 1 | 1 |
| 0 | 0 | 1 | 1 | 1 | 1 | 1 | 0 |
| 0 | 1 | 0 | 0 | 1 | 1 | 1 | 1 |
| 0 | 1 | 0 | 1 | 0 | 0 | 0 | 1 |
| 0 | 1 | 1 | 0 | 1 | 0 | 0 | 0 |
| 0 | 1 | 1 | 1 | 0 | 1 | 1 | 1 |
| 1 | 0 | 0 | 0 | 1 | 0 | 1 | 1 |
| 1 | 0 | 0 | 1 | 0 | 1 | 1 | 0 |
| 1 | 0 | 1 | 0 | 1 | 1 | 0 | 0 |
| 1 | 0 | 1 | 1 | 0 | 1 | 0 | 1 |
| 1 | 1 | 0 | 0 | 0 | 0 | 1 | 0 |
| 1 | 1 | 0 | 1 | 1 | 1 | 0 | 1 |
| 1 | 1 | 1 | 0 | 0 | 0 | 0 | 0 |
| 1 | 1 | 1 | 1 | 1 | 0 | 1 | 0 |

Die Tabelle kann als Look-up-Tabelle zur Ausbildung der Abbildungseinrichtung 2q implementiert werden. Dabei wird eine bijektive Abbildung realisiert, sodass jedes mögliche Bitmuster aus vier Eingangsbits oder Eingangssignalzuständen $E_{q1}$, $E_{q2}$, $E_{q3}$, $E_{q4}$ genau einmal an den Ausgängen der Abbildungseinrichtung 2q als Ausgangssignalzustände $A_{q1}$, $A_{q2}$, $A_{q3}$, $A_{q4}$ auftritt.

Für den Fall, dass die Eingangssignale $E_{q1}$, $E_{q2}$, $E_{q3}$, $E_{q4}$ initial ein Bitmuster 0000 bilden, was laut Zeile 1 der Tabelle auf Ausgangssignale 0100 abgebildet wird, und das Eingangssignal $E_{q1}$ einen Zustandswechsel vollzieht ergibt sich als Ausgangsbitmuster gemäß der zweiten Zeile der obigen Tabelle 1001. Das heißt, der Zustandswechsel des Eingangssignals $E_{q1}$ von 0 auf 1 wird mit Hilfe der kombinatorischen Abbildung $K_q$ auf die drei Ausgangssignale $A_{q1}$, $A_{q3}$ und $A_{q4}$ "vervielfältigt". Denn das Ausgangssignal $A_{q1}$ ändert sich aufgrund der Zustandsänderung von $E_{q1}$ von 0 auf 1, das Ausgangssignal $A_{q3}$ von 1 auf 0 und das Ausgangssignal $A_{q4}$ von 0 auf 1.

Ein Eingangsbitmuster von 0010 führt zu einem Ausgangsbitmuster 0011 (vgl. dritte Zeile der Tabelle). Ausgehend von einem Bitmuster 0000 und einem Zustandswechsel des Eingangssignals $E_{q2}$ von 0 auf 1 ergeben sich daher ebenfalls Zustandswechsel bei den drei Ausgangssignalen $A_{q1}$, $A_{q2}$ und $A_{q3}$, obgleich nur ein eingangsseitiger Zustandswechsel im Eingangssignal $E_{q2}$ erfolgt ist.

Analog erkennt man für Eingangsbitmuster 0100 und 1000 ausgehend von 0000, dass sich drei oder alle vier Ausgangszustände ändern. Untersuchungen der Anmelderin für alle möglichen Zustandsänderungen von einzelnen Eingangssignalen ausgehend von allen 16 Eingangsbitmustern haben ergeben, dass bei der dargestellten Abbildung $K_q$ im Mittel ein Zustandswechsel oder eine Zustandsänderung eines Eingangssignals $E_{qi}$ zu 2,75 Zustandswechseln oder Zustandsänderungen in Ausgangssignalen führt.

Insofern werden bei der Umsetzung der kombinatorischen Abbildungen als elektronische Schaltkreise die Signalflanken, die den Zustandswechseln entsprechen, mit weiteren Jittern beaufschlagt und auf mehrere, im vorliegenden Beispiel auf 2,75 Ausgangssignale "kopiert". Insbesondere wird ein jitterbehaftetes Eingangssignal in mehrere jitterbehaftete Ausgangssignale überführt bzw. abgebildet, wobei durch die jeweilige Abbildung selbst zusätzliche Jitter ergänzt werden. Der Jitter, der als zufallsgebendes Phänomen genutzt wird, wird somit verstärkt und auf mehrere Kanäle verteilt.

Die als Beispiel in Tabellenform wiedergegebene kombinatorischer Abbildung $K_q$ kann äquivalent in Form von Booleschen Funktionen dargestellt werden.

Als disjunktive Normalform geschrieben lautet die kombinatorische Abbildung $K_q$:

$$A_{q4}=$$
$$OR[AND(E_{q4},E_{q3},E_{q1}),$$
$$AND(E_{q4},NOT[E_{q3}],NOT[E_{q1}]),$$
$$AND(NOT[E_{q4}],E_{q3},NOT[E_{q1}]),$$
$$AND(NOT[E_{q4}],NOT[E_{q3}],E_{q1})],$$

$$A_{q3}=$$
$$OR[AND(E_{q4},NOT[E_{q3}],E_{q2}),$$
$$AND(E_{q4},NOT[E_{q2}],E_{q1}),$$
$$AND(NOT[E_{q4}],E_{q2},E_{q1}),$$
$$AND(NOT[E_{q4}],NOT[E_{q2}],NOT[E_{q1}])]$$

$$A_{q2}=$$
$$OR[AND(E_{q4},NOT[E_{q3}],NOT[E_{q2}]),$$
$$AND(NOT[E_{q4}],NOT[E_{q3}],E_{q2}),$$
$$AND(E_{q3},E_{q2},E_{q1}),$$
$$AND(E_{q3},NOT[E_{q2}],NOT[E_{q1}])]$$

$$A_{q1}=$$
$$OR[AND(E_{q4},NOT(E_{q3}),E_{q2},E_{q1}),$$
$$AND(E_{q4},NOT[E_{q3}],NOT[E_{q2}],NOT[E_{q1}]),$$
$$AND(NOT[E_{q4}],E_{q3},NOT[E_{q2}]),$$
$$AND(NOT[E_{q4}],E_{q3},E_{q1}),$$
$$AND(NOT[E_{q4}],NOT[E_{q3}],E_{q2},NOT[E_{q1}]),$$
$$AND(NOT[E_{q4}],NOT[E_{q2}],E_{q1}),$$
$$AND(E_{q3},NOT[E_{q2}],E_{q1})]$$

Dabei steht OR für eine logische ODER-Verknüpfung, AND für eine logische UND-Verknüpfung und NOT für eine logische NICHT-Verknüpfung. Zur hardwaremäßigen Implementierung können die kombinatorischen Abbildungen anstelle einer Look-up-Tabelle auch als Verknüpfung von logischen Gattern gemäß der obigen Darstellung realisiert werden. Die disjunktive Normalformdarstellung kann auch in eine algebraische Normalform umgeschrieben werden, welche ebenfalls zum Entwurf von entsprechenden logischen Schaltungen verwendet werden kann. Man kann schreiben:

$$A_{q4}=XOR[E_{q1},E_{q3},E_{q4}]$$

$$A_{q3}=NOT[XOR(E_{q1},E_{q2},E_{q4},AND[E_{q4},E_{q2},E_{q1}],AND[E_{q4},E_{q3},E_{q2}])]$$

$$A_{q2}=\mathtt{XOR}\,[\,E_{q2}\,,E_{q3}\,,E_{q4}\,,\mathtt{AND}\,(E_{q3}\,,E_{q1})\,,\mathtt{AND}\,(E_{q4}\,,E_{q3})\,]$$

$$A_{q1}=\mathtt{XOR}\,[\,E_{q1}\,,E_{q2}\,,E_{q3}\,,E_{q4}\,,\mathtt{AND}\,(E_{q3}\,,E_{q1})\,,\mathtt{AND}\,(E_{q3}\,,E_{q2}\,,E_{q1})\,,$$
$$\mathtt{AND}\,(E_{q4}\,,E_{q3}\,,E_{q1})\,,\mathtt{AND}\,(E_{q4}\,,E_{q3}\,,E_{q2})\,]$$

Man erkennt in beiden Darstellungen, dass das Ausgangssignal $A_{q4}$ unabhängig von einem Zustandswechsel des Eingangssignals $E_{q2}$ ist. Eine noch weiter optimierte Konstruktion der kombinatorischen Abbildungen $K_q$ sieht vor, dass ein jeweiliges Ausgangssignal von möglichst vielen Eingangssignalen abhängt. Besonders bevorzugt wäre, dass jedes Ausgangssignal einer kombinatorischen Abbildung von allen Eingangssignalen für die Abbildung abhängig ist. Dann würden sich Jitter in den Signalen besonders gut multiplizieren und verstärken.

Die Signalpfade bzw. Kopplungen der kombinatorischen Gatter $2_1$ bis $2_{10}$ sind lediglich schematisch angedeutet. Nur zwischen den Gattern $2_5$ und $2_6$ sind explizit die vier Leitungen bzw. Verbindungen dargestellt.

Man kann nun, nachdem der (n=4) Vier-Spur-Ringoszillator schwingt, beispielsweise das Signal $A_{51}$, welches als Eingangssignal $E_{61}$ an das kombinatorische Gatter $2_6$ geführt ist, als zufällig schwankendes Signal betrachten. Eine Abtasteinrichtung 4 greift beispielsweise am Ausgang für das Signal $A_{51}$ den schwankenden Pegel ab und erzeugt daraus ein Zufallsbit ZB.

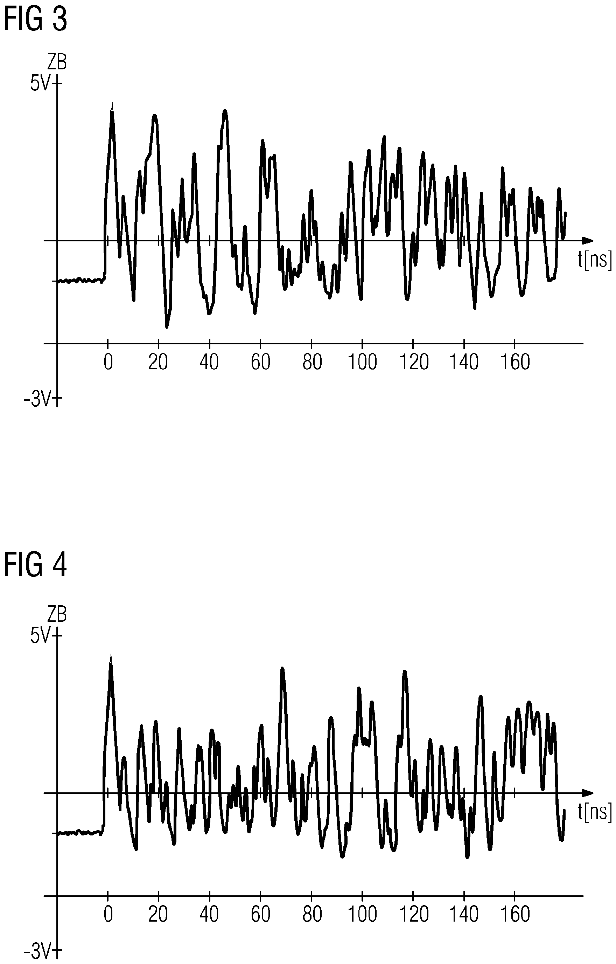

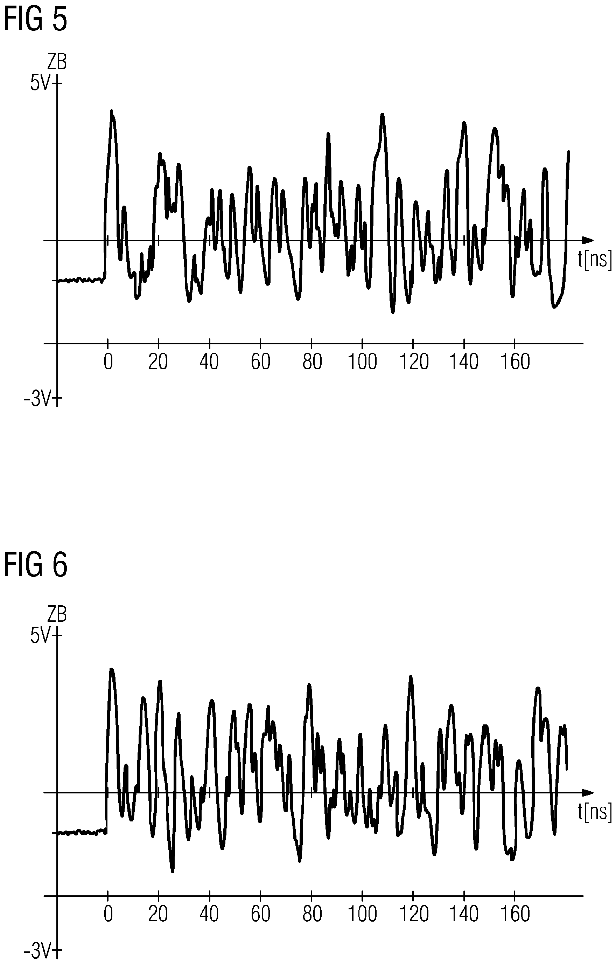

Untersuchungen der Anmelderin haben ergeben, dass günstige zufällige Signalkurven auch bei gleichen Anfangszuständen entstehen. Die Fig. 3 bis 6 zeigen Varianten von Zufallsbitsignalen ZB, die mit einer FPGA-Implementierung der in Fig. 2 dargestellten Schaltung erzeugt sind.

Auf der y-Achse ist der Signalpegel in Volt und auf der x-Achse die Zeit in Nanosekunden aufgetragen. Es wurden zufällige bijektive n-auf-n Bitabbildungen verwendet. Man erkennt, dass bei gleichen Startwerten bereits nach kurzer Zeit, beispielsweise nach 10 ns völlig unterschiedliche Signalformen entstehen, die zufällig verlaufen. Insofern können die zufälligen Signalformen als Basis zur Bestimmung von Zufallsbitwerten verwendet werden.

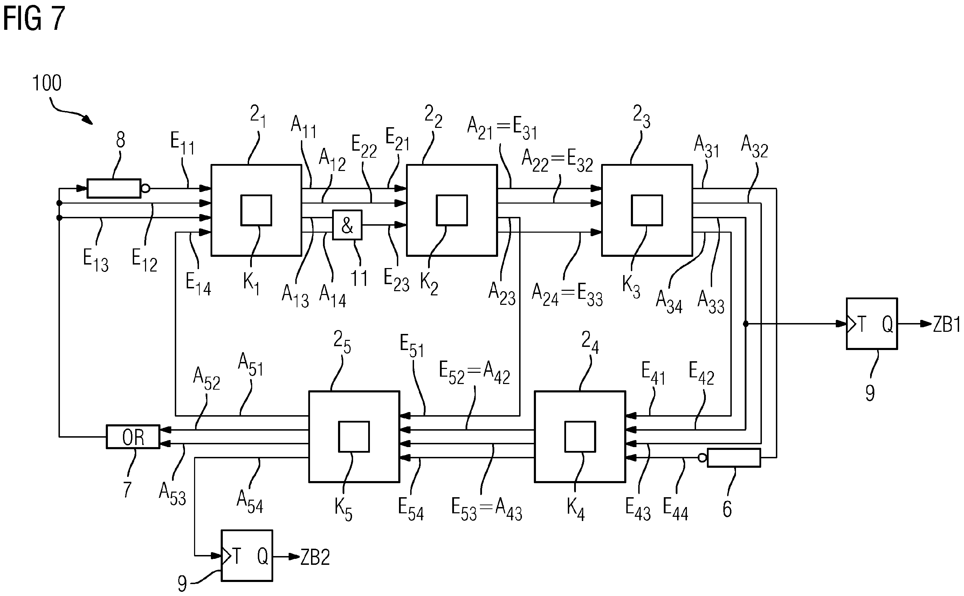

Die Fig. 7 zeigt eine schematische Darstellung eines dritten Ausführungsbeispiels für eine Vorrichtung zum Erzeugen von Zufallsbits. Die Vorrichtung 100 implementiert mehrere optionale Abwandlungen der bezüglich der Fig. 1 und 2 erläuterten Vorrichtungen 1 und 10. Die Vorrichtung 100 umfasst fünf Abbildungseinrichtungen $2_1$ - $2_5$, die jeweils eine kombinatorische Abbildung $K_1$ - $K_5$ implementieren. Dabei bilden die Abbildungen $K_1$ und $K_5$ jeweils vier Eingangssignale auf vier Ausgangsignale ab. Somit haben die Abbildungseinrichtungen $2_1$ und $2_5$ Eingänge für vier Eingangssignale $E_{11}$ - $E_{14}$ bzw. $E_{51}$ - $E_{54}$ und dieselbe Anzahl Ausgänge für jeweils vier Ausgangs-signale $A_{11}$ - $A_{14}$ bzw. $A_{51}$ - $A_{54}$. Die Abbildungen $K_2$ und $K_3$ bilden drei Eingangssignale $E_{21}$, $E_{22}$, $E_{23}$ bzw. $E_{31}$, $E_{32}$, $E_{33}$ auf vier Ausgangssignale $A_{21}$ - $A_{24}$ bzw. $A_{31}$ - $A_{34}$ ab. Die Abbildung $K_4$ ist eine vier auf drei Abbildung und erzeugt aus vier Eingangssignalen $E_{41}$ - $E_{44}$ drei Ausgangssignale $A_{41}$, $A_{42}$, $A_{43}$.

Das Ausgangssignal $A_{23}$ wird als Eingangssignal $E_{51}$ je nach Betrachtungsweise vor- bzw. rückgekoppelt. Die Ausgangssignale $A_{13}$ und $A_{14}$ werden mit Hilfe eines UND-Gatters 11 logisch verundet und als Eingangssignal $E_{23}$ der Abbildungseinrichtung $2_2$ zugeführt. Ähnlich werden die Ausgangssignale $A_{52}$ und $A_{53}$ mit Hilfe eines ODER-Gatters 11 logisch verodert, mit einem Inverter 8 invertiert und als Eingangssignal $E_{11}$ der Abbildungseinrichtung $2_1$ zugeführt. Das Ausgangssignal $A_{31}$ wird mit Hilfe eines Inverters 6 zum Eingangssignal $E_{44}$ invertiert.

Es ergeben sich mehrere Rückkopplungen derart, dass eine Zustandsänderung mindestens eines Ausgangssignals einer Abbildungseinrichtung als eine Zustandsänderung mindestens eines Eingangssignals einer anderen Abbildungseinrichtung zugeführt ist. Außerdem sind die Abbildungen $K_1$ - $K_5$ so eingerichtet, dass eine Zustandsänderung eines Eingangssignals im Mittel auf mehr als ein Ausgangssignal abgebildet wird. Beispielsweise kann für die Abbildungseinrichtungen $K_1$ und $K_5$ eine bijektive Abbildung, wie es bezüglich der Tabelle oben erläutert wurde, verwendet werden.

Eine Rückkopplungsschleife ergibt sich zum Beispiel aus den Signalen $A_{14}$, $E_{23}$, $A_{23}$, $E_{51}$ und $A_{51}$, wobei aufgrund der Ausgestaltung der Abbildungen $K_1$, $K_2$ und $K_5$ Signalflanken auch auf weitere Pfade in der Vorrichtung 100 übertragen werden und zufällige Signalverläufe hervorrufen.

Die Signale $A_{33}$ und $A_{54}$ werden jeweils mit Hilfe von Toggle-Flip-Flops 9 abgegriffen. Das jeweilige T-Flip-Flop 9 dient als Zähler, der steigende Signalflanken als 0→1 Durchgänge modulo 2 zählt. Am Datenausgang Q der Flip-Flops 9 ist dann ein jeweiliges Zufallsbit abgreifbar.

Die vorgeschlagene Vorrichtung und das zugrunde liegende Verfahren eignen sich insbesondere zur Implementierung in ASICs. Die logischen Funktionen der Abbildungseinrichtungen haben vorzugsweise dieselbe logische Tiefe, um eine gleiche Signallaufzeit der kombinatorischen Abbildungen zu erzielen. Auf Lookup-Tables kann insofern auch verzichtet werden. Die Erfindung ermöglicht also unter anderem eine schnelle Zufallsbiterzeugung bei geringem Hardwareaufwand.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Vorrichtung (1) zum Erzeugen von Zufallsbits (ZB) umfassend:

   mehrere Abbildungseinrichtungen ($2_1$ - $2_m$), wobei eine jeweilige Abbildungseinrichtung ($2_1$ - $2_m$) eingerichtet ist, eine vorgegebene Anzahl n Eingangssignale ($E_{11}$ - $E_{mn}$) mit Hilfe einer kombinatorischen Abbildung ($K_1$ - $K_m$) in eine vorgegebene Anzahl p Ausgangssignale ($A_{11}$ - $A_{mp}$) abzubilden, wobei die Abbildungseinrichtungen ($2_1$ - $2_m$) miteinander verkettet sind und mindestens eine Rückkopplungsschleife derart ausgebildet ist, dass eine Zustandsänderung mindestens eines Ausgangssignals ($A_{ij}$) einer Abbildungseinrichtung ($2_i$) als eine Zustandsänderung mindestens eines Eingangssignals ($E_{kl}$) einer anderen Abbildungseinrichtung ($2_k$) zugeführt ist, **dadurch gekennzeichnet, dass** mindestens eine kombinatorische Abbildung ($K_1$ - $K_m$) derart eingerichtet ist, dass eine Zustandsänderung eines Eingangssignals ($E_{11}$ - $E_{mn}$) einer jeweiligen Abbildungseinrichtung ($2_1$ - $2_m$) im Mittel auf mehr als ein Ausgangssignal ($A_{11}$ - $A_{mp}$) der jeweiligen Abbildungseinrichtung ($2_1$ - $2_m$) abgebildet wird.

2. Vorrichtung (1) nach Anspruch 1, wobei mindestens eine kombinatorische Abbildung ($K_1$ - $K_m$) derart eingerichtet ist, dass die Eingangssignale ($E_{11}$ - $E_{mn}$) unter Beaufschlagung eines Jitters und einer logischen Funktion auf die Ausgangssignale ($A_{11}$ - $A_{mp}$) abgebildet werden.

3. Vorrichtung (1) nach Anspruch 1 oder 2, wobei die kombinatorischen Abbildungen ($K_1$ - $K_m$) keine kombinatorische Abbildung implementieren, welche eine Permutation der Eingangssignale ($E_{11}$ - $E_{mn}$) auf die Ausgangssignale ($A_{11}$ - $A_{mp}$) liefert.

4. Vorrichtung (1) nach einem der Ansprüche 1 - 3, wobei die Abbildungseinrichtungen ($2_1$ - $2_m$) derart eingerichtet sind, dass deren Signaldurchlaufzeiten gleich sind.

5. Vorrichtung (1) nach einem der Ansprüche 1 - 4, wobei mindestens eine Abbildungseinrichtung ($2_1$ - $2_m$) eine Lookup-Table ($5_1$ - $5_m$) zur Implementierung der kombinatorischen Abbildung ($K_1$ - $K_m$) umfasst.

6. Vorrichtung (1) nach einem der Ansprüche 1 - 5, wobei mindestens eine kombinatorische Abbildung ($K_q$) einer Bijektion entspricht.

7. Vorrichtung (1) nach einem der Ansprüche 1 - 6, wobei die Abbildungseinrichtungen ($2_1$ - $2_m$) jeweils unterschiedliche kombinatorische Abbildungen ($K_1$ - $K_m$) implementieren.

8. Vorrichtung (1) nach einem der Ansprüche 1 - 7, wobei die miteinander verketteten Abbildungseinrichtungen ($2_1$ - $2_m$) eine n-mehrspurige Ringoszillatorschaltung ausbilden.

9. Vorrichtung (1) nach einem der Ansprüche 1 - 8, wobei die Vorrichtung mehrere Rückkopplungszweige (3) von verketteten Abbildungseinrichtungen ($2_1$ - $2_m$) umfasst.

10. Vorrichtung (1) nach einem der Ansprüche 1 - 9, wobei die Vorrichtung (1) derart eingerichtet ist, dass bei einem Einkoppeln von vorgegebenen Eingangssignalen ($E_{11}$ - $E_{mn}$) die vorgegebenen Eingangssignale ($E_{11}$ - $E_{mn}$) derart sind, dass die Vorrichtung (1) nicht in einem Fixpunkt vorliegt.

11. Vorrichtung (1) nach einem der Ansprüche 1 - 10, ferner mit einer Abtastvorrichtung (4) zum Abtasten eines oder mehrerer Ausgangssignale ($A_{11}$ - $A_{mp}$) an Ausgängen einer oder unterschiedlicher Abbildungseinrichtungen ($2_1$ - $2_m$).

12. Vorrichtung (1) nach Anspruch 11, wobei die Abtastvorrichtung (4) ein Zwischenspeicherelement, insbesondere ein T-Flip-Flop, aufweist.

13. FPGA-Einrichtung oder ASIC-Einrichtung mit einer Vorrichtung gemäß einem der Ansprüche 1 - 12.

14. Verfahren zum Erzeugen von Zufallsbits (ZB), bei dem mehrere kombinatorische Abbildungen ($K_1$ - $K_m$) verkettet

nacheinander durchführt werden, wobei eine jeweilige kombinatorische Abbildung ($K_1$ - $K_m$) eine vorgegebene Anzahl n Eingangssignale ($E_{11}$ - $E_{mn}$) auf eine vorgegebene Anzahl p Ausgangssignale ($A_{11}$ - $A_{mp}$) abbildet,

bei dem mindestens eine Rückkopplungsschleife derart gebildet wird, dass eine Zustandsänderung mindestens eines Ausgangssignals ($A_{ij}$) einer kombinatorischen Abbildung ($K_i$) als eine Zustandsänderung mindestens eines Eingangssignals ($E_{kl}$) einer anderen kombinatorischen Abbildung ($K_k$) zugeführt wird, **dadurch gekennzeichnet, dass**

mindestens eine kombinatorische Abbildung ($K_1$ - $K_m$) derart gewählt ist, dass eine Zustandsänderung eines Eingangssignals ($E_{11}$ - $E_{mn}$) durch die kombinatorische Abbildung ($K_1$ - $K_m$) im Mittel auf mehr als ein Ausgangssignal ($A_{11}$ - $A_{mp}$) abgebildet wird.

15. Verfahren nach Anspruch 14, wobei ein jeweiliges Eingangssignal ($E_{11}$ - $E_{mn}$) einen Bitwert darstellt.


**Claims**

1. Apparatus (1) for generating random bits (ZB) comprising:

   a plurality of mapping devices ($2_1$ - $2_m$), wherein a respective mapping device ($2_1$ - $2_m$) is designed to map a predefined number n of input signals ($E_{11}$ - $E_{mn}$) with the aid of a combinatorial mapping ($K_1$ - $K_m$) into a predefined number p of output signals ($A_{11}$ - $A_{mp}$),
   wherein the mapping devices ($2_1$ - $2_m$) are concatenated with one another and at least one feedback loop is formed in such a way that a state change of at least one output signal ($A_{ij}$) of one mapping device ($2_i$) is fed as a state change of at least one input signal ($E_{kl}$) to another mapping device ($2_k$)
   **characterized in that**
   at least one combinatorial mapping ($K_1$ - $K_m$) is designed in such a way that a state change of an input signal ($E_{11}$ - $E_{mn}$) of a respective mapping device ($2_1$ - $2_m$) is mapped on average onto more than one output signal ($A_{11}$ - $A_{mp}$) of the respective mapping device ($2_1$ - $2_m$).

2. Apparatus (1) according to Claim 1, wherein at least one combinatorial mapping ($K_1$ - $K_m$) is designed in such a way that the input signals ($E_{11}$ - $E_{mn}$) are mapped onto the output signals ($A_{11}$ - $A_{mp}$) with application of a jitter and a logical function.

3. Apparatus (1) according to Claims 1 or 2, wherein the combinatorial mappings ($K_1$ - $K_m$) implement no combinatorial mapping which yields a permutation of the input signals ($E_{11}$ - $E_{mn}$) onto the output signals ($A_{11}$ - $A_{mp}$).

4. Apparatus (1) according to any of Claims 1 - 3, wherein the mapping devices ($2_1$ - $2_m$) are designed in such a way that the signal transient times thereof are identical.

5. Apparatus (1) according to any of Claims 1 - 4, wherein at least one mapping device ($2_1$ - $2_m$) comprises a look-up table ($5_1$ - $5_m$) for implementing the combinatorial mapping ($K_1$ - Km).

6. Apparatus (1) according to any of Claims 1 - 5, wherein at least one combinatorial mapping ($K_q$) corresponds to a bijection.

7. Apparatus (1) according to any of Claims 1 - 6, wherein the mapping devices ($2_1$ - $2_m$) in each case implement different combinatorial mappings ($K_1$ - $K_m$).

8. Apparatus (1) according to any of Claims 1 - 7, wherein the mapping devices ($2_1$ - $2_m$) that are concatenated with one another form an n-multi-trace ring oscillator circuit.

9. Apparatus (1) according to any of Claims 1 - 8, wherein the apparatus comprises a plurality of feedback branches (3) of concatenated mapping devices ($2_1$ - $2_m$).

10. Apparatus (1) according to any of Claims 1 - 9, wherein the apparatus (1) is designed in such a way that when predefined input signals ($E_{11}$ - $E_{mn}$) are coupled in, the predefined input signals ($E_{11}$ - $E_{mn}$) are such that the apparatus (1) is not at a fixed point.

11. Apparatus (1) according to any of Claims 1 - 10, furthermore comprising a sampling apparatus (4) for sampling one or a plurality of output signals ($A_{11}$ - $A_{mp}$) at outputs of one or different mapping devices ($2_1$ - $2_m$).

12. Apparatus (1) according to Claim 11, wherein the sampling apparatus (4) has a buffer storage element, in particular a T flip-flop.

13. FPGA device or ASIC device having an apparatus according to any of Claims 1 - 12.

14. Method for generating random bits (ZB), wherein a plurality of combinatorial mappings ($K_1$ - $K_m$) are carried out successively in a concatenated fashion, wherein a respective combinatorial mapping ($K_1$ - $K_m$) maps a predefined number n of input signals ($E_{11}$ - $E_{mn}$) onto a predefined number p of output signals ($A_{11}$ - $A_{mp}$), wherein at least one feedback loop is formed in such a way that a state change of at least one output signal ($A_{ij}$) of one combinatorial mapping ($K_i$) is fed as a state change of at least one input signal ($E_{kl}$) to another combinatorial mapping ($K_k$), **characterized in that** at least one combinatorial mapping ($K_1$ - $K_m$) is chosen in such a way that a state change of an input signal ($E_{11}$ - $E_{mn}$) is mapped by the combinatorial mapping ($K_1$ - $K_m$) on average onto more than one output signal ($A_{11}$ - $A_{mp}$).

15. Method according to Claim 14, wherein a respective input signal ($E_{11}$ - $E_{mn}$) represents a bit value.


**Revendications**

1. Entité (1) pour générer des bits aléatoires (ZB), comprenant :

   plusieurs entités d'application ($2_1$ - $2_m$), une entité d'application respective ($2_1$ - $2_m$) étant configurée pour appliquer un nombre donné n de signaux d'entrée ($E_{11}$ - $E_{mn}$) sur un nombre donné p de signaux de sortie ($A_{11}$ - $A_{mp}$) à l'aide d'une application combinatoire ($K_1$ - $K_m$), les entités d'application ($2_1$ - $2_m$) étant enchaînées et au moins une boucle de rétroaction étant constituée de telle sorte qu'un changement d'état d'au moins un signal de sortie ($A_{ij}$) d'une entité d'application ($2_i$) est envoyé en tant que changement d'état d'au moins un signal d'entrée ($E_{k1}$) sur une autre entité d'application ($2_k$),
   **caractérisé en ce que**
   au moins une application combinatoire ($K_1$ - $K_m$) est configurée de telle sorte qu'un changement d'état d'un signal d'entrée ($E_{11}$ - $E_{mn}$) d'une entité d'application respective ($2_1$ - $2_m$) est appliqué, en moyenne, sur plus d'un signal de sortie ($A_{11}$ - $A_{mp}$) de l'entité d'application respective ($2_1$ - $2_m$).

2. Entité (1) selon la revendication 1, au moins une application combinatoire ($K_1$ - $K_m$) étant configurée de telle sorte que les signaux d'entrée ($E_{11}$ - $E_{mn}$) sont appliqués sur les signaux de sortie ($A_{11}$ - $A_{mp}$) avec application d'une gigue et d'une fonction logique.

3. Entité (1) selon la revendication 1 ou 2, les applications combinatoires ($K_1$ - $K_m$) n'implémentant pas d'application combinatoire qui fournit une permutation des signaux d'entrée ($E_{11}$ - $E_{mn}$) sur les signaux de sortie ($A_{11}$ - $A_{mp}$).

4. Entité (1) selon l'une des revendications 1 - 3, les entités d'application ($2_1$ - $2_m$) étant configurées de telle sorte que leurs temps de passage des signaux sont identiques.

5. Entité (1) selon l'une des revendications 1 - 4, au moins une entité d'application ($2_1$ - $2_m$) comprenant un tableau de consultation ($5_1$ - $5_m$) pour implémenter l'application combinatoire ($K_1$ - $K_m$).

6. Entité (1) selon l'une des revendications 1 - 5, au moins une application combinatoire ($K_q$) correspondant à une bijection.

7. Entité (1) selon l'une des revendications 1 - 6, les entités d'application ($2_1$ - $2_m$) implémentant respectivement différentes applications combinatoires ($K_1$ - $K_m$).

8. Entité (1) selon l'une des revendications 1 - 7, les entités d'application ($2_1$ - $2_m$) enchaînées formant un oscillateur en anneau à n voies.

9. Entité (1) selon l'une des revendications 1 - 8, l'entité comprenant plusieurs branches de rétroaction (3) d'entités d'application enchaînées ($2_1$ - $2_m$).

**10.** Entité (1) selon l'une des revendications 1 - 9, l'entité (1) étant configurée de telle sorte que, lors du couplage de signaux d'entrée donnés ($E_{11}$ - $E_{mn}$), les signaux d'entrée donnés ($E_{11}$ - $E_{mn}$) sont tels que l'entité (1) ne se trouve pas à un point fixe.

**11.** Entité (1) selon l'une des revendications 1 - 10, comportant en outre un dispositif d'échantillonnage (4) pour échantillonner un ou plusieurs signaux de sortie ($A_{11}$ - $A_{mp}$) à des sorties d'une ou de différentes entités d'application ($2_1$ - $2_m$).

**12.** Entité (1) selon la revendication 11, le dispositif d'échantillonnage (4) comportant un élément de stockage intermédiaire, et plus particulièrement une bascule T.

**13.** Dispositif FPGA ou dispositif ASIC comportant une entité selon l'une des revendications 1 - 12.

**14.** Procédé pour générer des bits aléatoires (ZB), dans lequel plusieurs applications combinatoires ($K_1$ - $K_m$) sont effectuées successivement de manière enchaînée, une application combinatoire respective ($K_1$ - $K_m$) appliquant un nombre donné n de signaux d'entrée ($E_{11}$ - $E_{mn}$) sur un nombre donné p de signaux de sortie ($A_{11}$ - $A_{mp}$), dans lequel au moins une boucle de rétroaction est formée de telle sorte qu'un changement d'état au moins d'un signal de sortie ($A_{ij}$) d'une application combinatoire ($K_i$) est envoyé en tant que changement d'état au moins d'un signal d'entrée ($E_{k1}$) sur une autre application combinatoire ($K_k$), **caractérisé en ce que** au moins une application combinatoire ($K_1$ - $K_m$) est choisie de telle sorte qu'un changement d'état d'un signal d'entrée ($E_{11}$ - $E_{mn}$) est appliqué par l'application combinatoire ($K_1$ - $K_m$), en moyenne, sur plus d'un signal de sortie ($A_{11}$ - $A_{mp}$).

**15.** Procédé selon la revendication 14, un signal d'entrée respectif ($E_{11}$ - $E_{mn}$) représentant une valeur binaire.

FIG 1

$E_{11}...E_{1n}$  $2_1$  $A_{11}...A_{1n}$  $2_2$  $E_{m1}...E_{mn}$  $2_m$  $A_{m1}...A_{mn}$

$K_1$  $3$  $n$  $K_2$  $K_m$  $4$

$n$  $n$

ZB

FIG 2

$10$

$5_1$ $2_1$  $5_2$ $2_2$  $5_3$ $2_3$  $5_4$ $2_4$  $5_5$ $2_5$  $A_{51}$  $4$

$5_{10}$ $2_{10}$  $5_9$ $2_9$  $5_8$ $2_8$  $5_7$ $2_7$  $5_6$ $2_6$  ZB

$E_{61}$

FIG 3

FIG 4

FIG 5

FIG 6

FIG 7

**IN DER BESCHREIBUNG AUFGEFÜHRTE DOKUMENTE**

**In der Beschreibung aufgeführte Patentdokumente**

- EP 1643643 A1